# Europäisches Patentamt

## European Patent Office
## Office européen des brevets

(11) Publication number: **0 051 088**
**B1**

# EUROPEAN PATENT SPECIFICATION

(45) Date of publication of patent specification: **22.05.85**

(51) Int. Cl.⁴: **G 01 B 21/26, G 01 B 5/00**

(21) Application number: **80201039.7**

(22) Date of filing: **03.11.80**

---

(54) **Lifting ramp for motor vehicles with device for controlling the wheel trim.**

---

(43) Date of publication of application:
**12.05.82 Bulletin 82/19**

(45) Publication of the grant of the patent:
**22.05.85 Bulletin 85/21**

(84) Designated Contracting States:
**AT DE FR GB NL SE**

(56) References cited:
**FR-A-2 263 500**
**US-A-2 821 790**
**US-A-3 003 246**

(73) Proprietor: **Rossato, Eride**
**Via Mazzini 7**
**I-30035 Ballo Di Mirano (Venice) (IT)**

(72) Inventor: **Rossato, Eride**
**Via Mazzini 7**
**I-30035 Ballo Di Mirano (Venice) (IT)**

(74) Representative: **Piovesana, Paolo**
**Corso del Popolo, 70**
**I-30172 Venezia-Mestre (IT)**

Courier Press, Leamington Spa, England.

# Description

The present invention relates to a lifting ramp for motor vehicles with device for controlling the wheel trim.

Lifting ramps provided at the front extremity of each guide with a hollow in which is housed a disk having the superior surface coplanar to the level of the guide itself are well known. Each disk is mounted on balls and in such a way move horizontally in every direction. To control the wheel trim of the front wheels of a motor vehicle, this is made to move forward along the guides of the ramp and then is stopped with the front wheels on the disks. Therefore, with the help of suitable and well known optical or electronical equipment it's possible to verify the correct wheel trim and eventually intervene in order to bring the measured values to those prescribed by the manufacturers, whereas, to control the wheel trim of the back wheels, the motor vehicle is made to move in reverse onto the ramp until the back wheels are on the disks and then the same control operations as indicated before are carried out.

The drawback of these ramps consists in the fact that complete control of the wheel trim results lengthy and laborious, and requires a considerable waste of time on the part of the operator other than a series of awkward and laborious manoeuvres.

With the aim of eliminating this drawback it has been proposed that another pair of disks should be used, these would be temporarily applied under the back wheels of the motor vehicle after it has been positioned with the front wheels on the disks, as previously indicated, and lifted with respect to the guides themselves.

If this solution eliminates the necessity of the vehicle mounting twice on the ramp, it, nevertheless requires equipment for additional lifting of the motor vehicle in respect to the guides, and is not therefore applicable to ramps that don't allow for this type of manoeuvre.

Furthermore such a solution that allows simultaneous positioning of the four wheels on the disks, and in theory would allows a simultaneous control of their trim, in actual fact presents considerable limitations in so far as:

— with optical control systems it is necessary to move the comparators from one wheel to the other and this transfer has a negative affect on the correct bearing of the size under measure and on the precision of the measures themselves;

— with electronical systems, which are insensitive to these limitations, it is necessary that the four points where the wheels rest are situated on a perfectly horizontal plane, and that is obviously not possible, keeping in mind the thickness of the back disks.

The aim of the invention is to eliminate these drawbacks and to control, by using electronical equipment, the trim of the four wheels of any motor vehicle, without having to move it from the lifting ramp.

This aim is reached, according to the invention, with a lifting ramp for motor vehicles with device for controlling the wheel trim, equipped with a pair of planar guides in which are provided housings for disks, the disks being free of rotation and coplanar to the plane of the guides, on the disks being positioned a first pair of wheels corresponding to the front or rear wheels of a motor vehicle, characterized in that each guide is provided with a longitudinal opening, in which is housed at least one plate coplanar to the plane of the guide, free in movement of transversal and/or longitudinal motion and/or rotation, and with blocking means for blocking the or each plate with respect to the guide itself, the longitudinal dimension of said at least one plate and its or each respective position with the respective disk being such as to allow self support for one of a second pair of wheels corresponding respectively to the rear or front wheels of the motor vehicle.

This invention is herewith further clarified in a form of practical realization carried out purely by way of example and not limitative with reference to the enclosed drawings, in which:

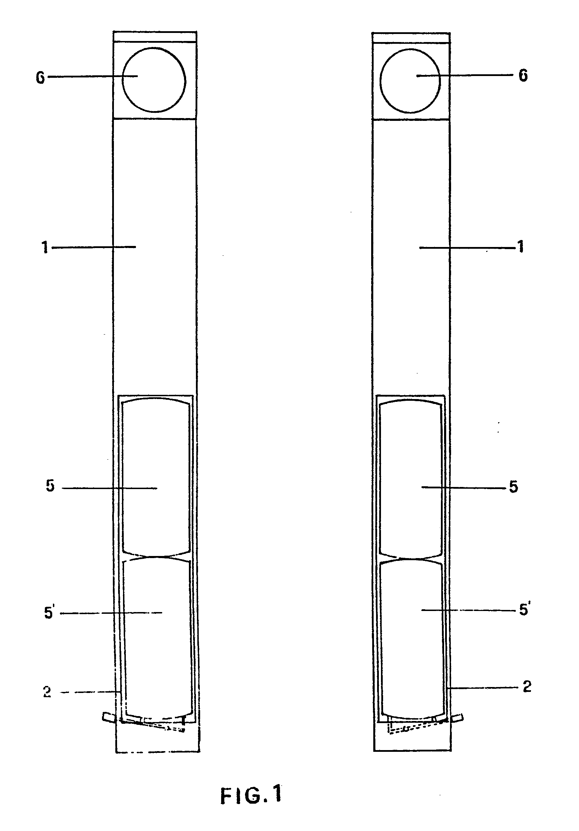

Figure 1 shows in plan a lifting ramp according to the invention,

Figure 2 shows in enlarged partial view the particular of the movable plates, and

Figure 3 shows the same particular according to the enlarged transversal section III—III of Figure 2.

As can be seen from the figures, the lifting ramp according to the invention comprises two parallel side frames 1 which form the guides of the ramp and which are liftable with respect to an underlying basic frame, not shown in the drawings.

The upper plane of each guide 1 is lacking of a rectangular extension portion 2 which places in evidence two underlying longitudinal horizontal bars 3, in which are mounted spherical supports 4. Two plates 5, 5' are placed on these spherical supports 4, which have a total length and width slightly inferior to the corresponding dimensions of the opening itself, in such a way that transversal and longitudinal movement is possible by running on the spherical supports 4. Furthermore the lesser sides of the plates 5, 5' are slightly curved, with the aim of allowing limited rotations of the plate itself on a horizontal plane.

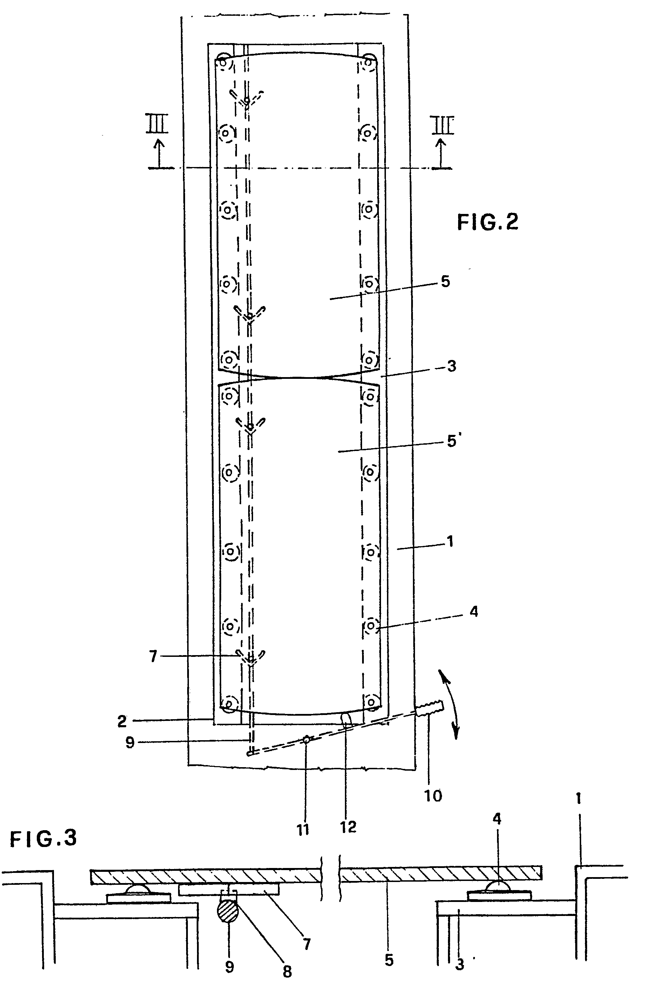

The level of the horizontal bars 3, the dimensions of the spherical supports 4 and the thickness of the plates 5, 5' are such that they maintain the higher surface of the latter coplanar to the higher surface of the corresponding guide 1 (cfr. fig. 3).

The total length of each portion 2 and the distance of this from the front extremity of each guide has been calculated in such a way that, when any motor vehicle is positioned with the front wheels on traditional disks 6 positioned to the front extremity of the said guides, without doubt the back wheels of the motor vehicle fall on one of the two plates 5, 5', making possible in this way use of the ramp substantially for motor vehicles of any pitch.

A pair of "V" shaped elements 7 which are welded to each plate 5, 5', in each of which it's possible to engage an integral pin 8 to an underlying rod 9 axially mobile by the control of a lever 10. The said lever 10 is pivotally mounted on a pin 11 integral to the corresponding guide and is provided, at a point located between the handle and the pin 11, of a pusher acting on the transversal side of the plate 5'.

The operation of the ramp according to the invention is the following:
in order to control the wheel trim of a motor vehicle the levers 10 are preliminarily moved, in such a way that the corresponding bar 9 is axially moved in a way that it causes engagement of the pins 8 in the "V" shaped elements 7, and simultaneous resting of the pusher 12 against the edge of the corresponding plate 5'. After having blocked the levers 10 in this position, the plates 5, 5' of each guide 1 result permanently blocked with respect to the guides themselves.

At this point the motor vehicle is made to mount on the guide 1 and moved forward until the front wheels are positioned on the disks 6. In this position, in which the back wheels are, without doubt, positioned on one of the two plates 5, 5' (or on each), the levers 10 are moved in the opposite way, freeing the plates 5, 5' for running on the spheres 4, the plates being easily exposed to the stress received from the front wheels.

At this point it is possible to control, with traditional equipment, preferably electronical, the trim of the four wheels.

From what has been said, the lifting ramp according to the invention clearly presents numerous advantages, namely:

— it is possible to control the wheel trim of the four wheels keeping the resting plane of the motor vehicle perfectly horizontal and avoiding movement of such during measurement,
— substantial possibility of any motor vehicle of any pitch,
— the possibility of allowing for any type of vehicle movement of the plates (and therefore the wheels) in a longitudinal transfer, in transversal transfer and in a rotary way.

## Claims

1. Lifting ramp for motor vehicles with device for controlling the wheel trim, equipped with a pair of planar guides (1) in which are provided housings for disks, the disks (6) being free of rotation and coplanar to the plane of the guides, on said disks being positioned a first pair of wheels corresponding to the front or rear wheels of a motor vehicle, characterized in that each guide (1) is provided with a longitudinal opening (2), in which is housed at least one plate (5, 5') coplanar to the plane of the guide, free in movement of transversal and/or longitudinal motion and/or rotation, and with blocking means for blocking the or each plate with respect to the guide itself, the longitudinal dimension of said at least one plate (5, 5') and its or each respective position with the respective disk (6) being such as to allow self support for one of a second pair of wheels corresponding respectively to the rear or front wheels of the motor vehicle.

2. Lifting ramp according to claim 1, wherein the or each plate (5, 5') rests on spherical supports (4) mounted in a position underneath the plane of the relative guide (1).

3. Lifting ramp according to claim 1, comprising a pair of said at least one plate (5, 5') for each opening (2).

4. Lifting ramp according to claim 1, wherein the or each plate (5, 5') is provided with a further housing (7) co-operating with pins (8) controlled by a lever (10) movable by the operator.

5. Lifting ramp according to claim 4, wherein the further housing (7) is positioned under the or each plate (5, 5') and consists in "V" shaped reliefs aligned with the longitudinal axis of the relative guide (1) and wherein the pins (8) are integral to a rod (9) axially mobile with respect to the or each plate (5, 5') by control of the lever (10), said pins (8) having a blocking effect on the "V" shaped reliefs.

6. Lifting ramp according to claim 5, wherein the lever (10) bears, at an extremity, the rod (9) and is pivotally mounted on a further pin (11) fixed to the guide (1), said lever being provided with a pusher (12) which acts on the transversal edge of the or each plate (5, 5'), in contrast to the blocking effect of the pins (8) on the "V" shaped reliefs (7).

7. Lifting ramp according to claim 1, wherein the or each plate (5, 5') are generally rectangular with the lesser sides being curved and placed transversally with respect to the longitudinal axis of the relative guide (1).

## Patentansprüche

1. Heberampe für Kraftfahrzeuge mit einer Vorrichtung zur Kontrolle der Radstellung, die mit einem Paar ebener Führungen (1) versehen ist, in denen Unterbringungsmöglichkeiten für Scheiben vorgesehen sind, wobei die Scheiben (6) drehungsfrei und coplanar mit der Ebene der Führungen sind, wobei weiters auf den genannten Scheiben ein erstes Radpaar, entsprechend den Vorder- oder Hinterrädern eines Kraftfahrzeuges angeordnet ist, dadurch gekennzeichnet, daß jede Führung (1) mit einer länglichen Ausnehmung (2) versehen ist, in welcher wenigstens eine Platte (5, 5') angeordnet ist, welche coplanar mit der Ebene der Führung, frei in der Bewegung des Quer- und/oder Längsschubes und/oder der Drehung ist und welche mit Blockiermitteln zum Feststellen der oder jeder Platte in Bezug auf die Führung versehen ist, wobei die Längsabmessung besagter wenigstens einer Platte (5, 5') und ihre oder die jeweilige Position einer jeden in bezug auf die jeweilige Scheibe (6) so sind, daß sie dei Eigenabstützung für ein Rad eines zweiten Radpaares entsprechend jeweils den Hinter- oder Vorderrädern des Kraftfahrzeuges erlauben.

2. Heberampe nach Anspruch 1, wobei die oder jede Platte (5, 5') auf sphärischen Lagern (4) ruht, die in einer Position unterhalb der Ebene der entsprechenden Führung (1) angebracht sind.

3. Heberampe nach Anspruch 1, die ein Paar genannter Platten oder zumindest eine Platte (5, 5') für jede Ausnehmung (2) aufweist.

4. Heberampe nach Anspruch 1, bei der die oder jede Platte (5, 5') mit einer weiteren Unterbringungsmöglichkeit (7) versehen ist, die mit Stiften (8) zusammenwirkt, welche durch einen Hebel (10), der durch die Bedienungsperson bewegbar ist, gelenkt werden.

5. Heberampe nach Anspruch 4, bei der die weitere Unterbringungsmöglichkeit (7) unter der oder unter jeder Platte (5, 5') angeordnet ist und aus "V"-förmigen Erhebungen besteht, die sich in einer Linie mit der Längsachse der entsprechenden Führung (1) befinden und wobei die Stifte (8) mit einem Stab (9) verbunden sind der durch Steuerung mit dem Hebel (10) in Bezug auf die oder jede Platte (5, 5') achsial bewegbar ist, wobei genannte Stifte (8) einen Blockiereffekt auf die V-förmigen Erhebungen ausüben.

6. Heberampe nach Anspruch 5, bei der der Hebel (10) an einem Ende den Stab (9) trägt und drehbar an einem weiteren Stift (11) montiert ist, der an der Führung (1) fixiert ist, wobei besagter Hebel mit einem Schiebar (12) versehen ist, welcher entgegen dem Blockiereffekt der Stifte (8) der V-förmigen Erhebungen (7) auf den Querrand der oder jeder Platte (5, 5') wirkt.

7. Heberampe nach Anspruch 1, bei der die oder jede Platte (5, 5') im wesentlichen rechtwinkelig ist, wobei die kleineren Seiten gekrümmt und in Bezug auf die Längsachse der entsprechenden Führung (1) quer angeordnet sind.

**Revendications**

1. Pont élévateur pour véhicules automobiles avec équipement de controle de la géométrie des roues pourvu d'une paire de voies coplanées dans lesquelles ont été pratiqués des évidements pour le logement des disques, les disques étant libres de tourner et coplanés au plan des voies, sur les disques étant placée une première paire de roues, qui correspondent aux roues avant et arrière du véhicule automobile, caractérisé en ce que chacune des voies (1) est munie d'une ouverture longitudinale (2), dans laquelle est logée au moins une plaque (5, 5') située sur le même plan horizontal de la voie (1), pouvant se déplacer transversalement et longitudinalement et/ou en rotation, et munie des moyens pour bloquer la ou chaque plaque par rapport à ladite voie (1), la longueur de ladite au moins une plaque et chaque ou sa position respective au respectif disque (6) étant telle qu'elle permette l'appui d'une roue de une seconde paire de roues qui correspondent aux roues arrière et avant du véhicule.

2. Pont élévateur selon la revendication 1, caractérisé en ce que la ou chacune des plaques (5, 5') repose sur une pluralité de supports à sphères (4) montés en position audessous du plan de la voie correspondante (1).

3. Pont élévateur selon la revendication 1, caractérisé en ce qu'il comprend au moins une paire de cette plaque (5, 5') pour chaque ouverture (2).

4. Pont élévateur selon la revendication 1, caractérisé en ce que la ou chaque plaque (5, 5') est munie d'éléments (7) supplementaires coopérant avec des pivots d'engagement (8) commandés par un levier (10) actionable par l'opérateur.

5. Pont élévateur selon la revendication 4, caractérisé en ce que l'élément supplémentaire (7) est placé sous la ou chaque plaque (5, 5') et consiste en saillies à V (7) alignées avec l'axe longitudinal de la voie (1) et que les pivots (8) sont solidaires d'une tige (9) mobile axialement par rapport à la ou à chaque plaque par la commande d'un levier (10).

6. Pont élévateur selon la revendication 5, caractérisé en ce que le levier (10) est pourvu, à l'extrémité, d'une tige (9) et que le levier (10) est monté tournant sur un pivot suppléméntaire (11) fixé sur la voie (1), le dit levier étant pourvu d'un poussoir (12) agissant sur le bord latéral de la ou de chaque plaque (5'), en contrast avec l'effet bloquant des pivots (8) dans les éléments (7) à V.

7. Pont élévateur selon la revendication 1, caractérisé en ce que la ou chaque plaque (5, 5') est sensiblement rectangulaire et a les petits cotés courbes et disposés transversalement par rapport à l'axe longitudinal de la voie.

FIG. 1

0 051 088

FIG.2

FIG.3

2